# EUROPEAN PATENT SPECIFICATION

(11) **EP 2 331 607 B1**
(45) Date of publication and mention of the grant of the patent: **09.05.2012**
(21) Application number: 09784900.4
(22) Date of filing: 07.08.2009
(51) Int. Cl.: C08G 77/24, C08L 83/08

(54) **COATING FOR REDUCING EXPLOSION HAZARD**
ÜBERZUG ZUR VERRINGERUNG VON EXPLOSIONSGEFAHR
REVÊTEMENT DE RÉDUCTION DU RISQUE D'EXPLOSION

(30) Priority: 07.08.2008 GB 0814486
(43) Date of publication of application: 15.06.2011
(73) Proprietor: Pyroban Ltd., West Sussex BN43 6QG (GB)
(72) Inventor: SPRAGGON, Lee, West Sussex BN43 6QG (GB); JACKSON, Mark, Ellis, West Sussex BN43 6QG (GB)
(74) Representative: Hedley, Nicholas James Matthew
(86) International application number: PCT/GB2009/001955
(87) International publication number: WO 2010/015837

(56) References cited:
- EP-A- 0 387 806
- GB-A- 2 321 464
- US-A1- 2005 038 188

## Description

### Technical Field

The present invention relates to a coating that reduces the explosion hazard in a potentially explosive atmosphere caused by an article being present at an elevated temperature.

### Background Art

Explosive atmospheres can be caused by flammable gases, mists or vapours or by combustible dusts. If there is enough of a substance, mixed with air, then all that is needed to cause an explosion is a source of ignition. Such ignition sources may include articles or components operating at elevated temperatures within the explosive atmosphere. Another possible source of ignition is a spark caused, for example, by static electricity.

Explosive atmospheres or potentially explosive atmospheres are governed by substantial health and safety regulation in many countries. In Europe, ATEX is a name commonly given to a framework of regulations governing explosive atmospheres and to the standards that equipment operating within such atmospheres must meet and also to protective systems that may be put in place to prevent explosions in such explosive atmospheres.

ATEX regulations allow diesel or gas engines to be operated in certain restrictive zones, known as ATEX Zoned areas. However, the operating temperature of the engine and its components must be kept below a maximum temperature, which in so-called "Class T3" environments, may be below 200°C when the ambient temperature is in the range -20°C to +40°C. If an engine, operating at full power, can give rise to hot spots that are in excess of the allowable maximum temperature, the surface can be cooled by including coolant path channels in the relevant parts of the engine. However, this adds substantially to the cost of the engine and the complexity of its operation.

Another solution is to de-rate the engine, i.e. only allow its use if it is operated below its maximum power so that the maximum temperature that it operates under is below the threshold. Alternatively, it is possible to limit the operation of the engine so that it is only allowed to be operated if the ambient temperature is less than the maximum, e.g. less than 35°C instead of less that 40°C in a Class T3 environment. As will be appreciated, both these measures reduce the efficiency and operability of gas and diesel engines in potential explosive environments.

However, the health and safety regulations often run counter to the concept of reducing CO₂, NOₓ, and SOₓ emissions, which usually require engines to operate at higher temperatures, for example by using turbocharger. However, such high temperatures may not be permissible in view of the ATEX directives and particularly the use of dry manifolds, cylinder heads, and turbocharged engines may not be permitted since these components may reach a temperature in excess of that permitted under the health and safety regulations.

The present invention solves the above problem by providing a thermal barrier coating that can be applied to metal surfaces and other surfaces that get hot so that the temperature of the surface that is exposed to the potentially explosive environment is reduced below the required temperature class threshold. By lowering the surface temperature, the risk of explosions can be eliminated and the equipment may be safely operated within the ATEX directive in the relevant type of area (which is Zone 2 for gas and diesel engines) even if the equipment itself has an operating temperature above the ATEX limits.

Silicone rubber is a polymer that has a "backbone" of silicon-oxygen linkages and fluorosilicone rubber is a polymer that has a "backbone" of silicon-oxygen linkages and having fluorine-containing side groups. Normally, heat is required to vulcanise (set) the silicone and fluorosilicone rubber; this is normally carried out in a two stage process at the point of manufacture into the desired shape, and then in a prolonged post-cure process.

Mixtures of silicone rubber and fluorosilicone rubber are known. For example, GB 2321464 describes the application of a fluorosilicone coating 0.1 to 10 mil (2.5 to 250 µm) thick to a gasket. The fluorosilicone coating can include not only a fluorosilicone but also a silicone and a catalyst. Its primary use is to prevent seepage of oil from gaskets. GB2045787 disclosed a siloxane elastomer composition for use in providing electrical insulation. Within the scope of the claims, it is possible that up to 50% of the siloxane radicals may include fluorine. EP 0387806 discloses a gel composition containing polydiorganosiloxane containing silicone-bonded fluorocarbons. The gel is used at temperatures of about 100°C and exhibits a resistance to discolouration. US 5340866 discloses a fluorosilicone composition of use as hoses, seals, gaskets, linings for fuel tanks and electrical insulation subject to degradation from fuel, lubricating oil or hydraulic fluid.

### Disclosure of Invention

The present invention provides an arrangement that allows a hot surface to be used, even in a potentially explosive atmosphere, e.g. an atmosphere covered by the ATEX directive or similar regulation governing explosive atmospheres, and equipment operating within such atmospheres. This is achieved by applying a thermally insulating coating to the hot surface so that it is not exposed to the potentially explosive atmosphere but rather it is the surface of the coating that is exposed to the atmosphere and the surface of the coating is at a temperature below the temperature of the underlying hot surface. The coating in particular is intended to cover both metallic and non-metallic components and other surfaces that are only permitted to operate at a temperature of up to 200°C. The drop in temperature across the coating can be as much as 15 - 25% per 4mm layer, the percentage drop in temperature being calculated as the drop in temperature across the coating as a percentage of the temperature of the underlying hot surface (in °C); thus the exposed surface of the coating has a temperature well below the 250°C temperature maximum of the underlying hot surface. Multiple layers or thicker layers can be used, as appropriate, to provide the necessary reduction in temperature.

A further problem lies in that the atmospheres are potentially explosive since there is potentially a volatile organic material, most commonly a fuel or solvent, in the vicinity of the hot surface and many thermally insulating materials are attacked by such volatiles. Also, many thermally insulating materials are not stable over an extended period at elevated temperatures, e.g. above 200°C.

In the composition of the present specification, all percentages are given by volume before curing unless specifically expressed to the contrary.

In accordance with the present invention, there is provided the use of a composition that can be applied to a surface of an article to provide a surface coating that is at least 4mm thick on an article, e.g. an engine component, to reduce the temperature of the component that is exposed to the atmosphere, which composition comprises in % by volume:
(a) about 9 to about 90% of one or more silicone rubber,
(b) about 9 to about 90% of one or more fluorosilicone rubber
(c) about 0.05 to about 1% of one or more catalyst that is capable of catalysing the cross-linking of the silicone and fluorosilicone rubbers and
(d) about 0 to about 20% of one or more additive, as defined in claim 1.

It has been found that the above composition provides a substantial surface temperature reduction, particularly at relatively thin coating thicknesses, while at the same time has a good resistance to oil and fuel, a good resistance to thermal shock and good impact resistance.

We envisage that the layer of the composition will generally be up to about 12mm thick built up using between 1 to 3 layers of the composition..

Other coatings have been tested, e.g. epoxy thermal barriers, mica impregnated insulating coatings, and ceramic insulating coatings, and none provide the combination of properties achieved by the coating of the present invention.

The silicone rubber compound must be solid at room temperature in its cured state. Preferred silicone rubbers are those from the VMQ class and preferred fluorosilicone rubbers are from the FVMQ classes. In terms of the curing of the rubber, HTV (high temperature vulcanised) are preferred.

The components are mixed together and may then be partially cured to form a solid, e.g. a sheet. This can be achieved by extruding the rubber composition at an elevated temperature which both shapes the composition and partially cures the rubbers (i.e. the first stage of the above-mentioned two-stage curing is performed during extrusion). The extrusion is preferably through a slot-shaped die to provide sheets, e.g. strips, that are partially cured. By changing the nozzle, other shapes and thicknesses are possible. We have found that extruded sheets 3 to 8 mm thick work well.

The silicone rubber used provides better thermal insulation than the flurosilicone and therefore should be used in amounts of at least 50%, e.g. at least 60% when the operating temperature of the surface underlying the coating approaches or exceeds the allowable limit for the atmosphere and class of environment concerned, e.g. if it approaches or exceeds or potentially exceeds 200°C for Class T3 environments. For articles operating well above the allowable maximum temperature, e.g. at a temperature of 250°C in an environment in which the article should not exceed 200°C, even higher amounts of silicone polymer should be used, for example 70 to 90% e.g. 80 to 90%. A mixture of different silicone rubbers may be used.

The fluorosilicone rubbers provide a superior resistance to oil and fuel than silicone rubbers and should be present in an amount at least about 9%. Obviously the fluorosilicone rubbers can be present in an amount greater than 9% if higher resistance to oil and fuel is required but flurosilicone rubber has lower thermal insulation properties than silicone rubber and therefore, for the higher temperature applications, its use should be towards the lower end of the range given above, for example 9 to 30%, for example 10 to 20%. It is also more expensive than silicone rubber and this will generally limit the amount included in the composition. A mixture of different fluorosilicone rubbers may be used.

The catalyst used can be any catalyst used to cross-link (vulcanise) silicone and fluorosilicone rubbers and may, for example, be a high temperature vulcanisation (HTV) catalyst, such as a peroxide, or a room temperature vulcanisation (RTV) catalyst, such as platinum. The amount of catalyst used should be sufficient to provide cross-linking of the compounded rubber *in situ* on the article concerned at the curing temperature and will generally be in the range of 0.05 to 1%, e.g. 0.8 to 0.5%, such as 0.1 to 0.3%.

The composition may include additives, pigments, fillers, plasticizers and agents that provide electrical conduction properties to the composition, for example graphite or other forms of carbon. The amounts of such additives etc. may be 0 to 20%, although the total amount will generally be less than 10%, e.g. less than 5%.

It has been found that the compositions in accordance with the present invention can possess good impact resistance so that, for example, if an object is dropped onto the coating surface, it is robust in withstanding such impacts.

Furthermore, the coating of the present invention provides good resistance to thermal shock so that if the underlying article suddenly changes temperature, for example because it is part of a machine that is switched off and cools quickly, the coating is flexible and can remain intact in such circumstances.

The adhesion between the coating of the present invention and the underlying surface depends substantially on the nature of the surface it is applied to, which will generally be a metallic surface. In order to provide improved adhesion, the surface should be thoroughly clean, degreased and optionally roughened, e.g. by sand or grit blasting. However, it is possible to include a bonding agent between the surface and the coating, although good adhesion between the composition of the present invention and clean metallic surfaces has been achieved. Such bonding agents may be applied to the area to be covered by the silicone rubber compound, with a dry thickness of at least 10 µm. Bonding agents are well known in the field of silicone rubbers and other fields and any known bonding agent may be used.

As mentioned above, sparks can initiate explosions and in particular sparks that are generated by static electricity. The silicone/fluorosilicone rubbers used in the coating of the present invention are electrically insulating and this can give rise to static electricity if, for example, a dry cloth or a dry overall is rubbed against it. In order to avoid this, it is possible to apply an over coat of an electrically conductive silicone rubber compound or to incorporate a conductive material, e.g. carbon black, into the composition.

### Brief Description of the Drawings

There will now be described some examples of the composition in accordance with the present invention and certain test results, which make reference to the accompanying drawings in which:
Figure 1 shows the test rig of Examples 2 and 3,
Figure 2 is a photograph of a diesel engine turbocharger compressor housing,
Figure 3 and Figure 4 are photographs of the housing of Figure 2 but with a coating in accordance with the present invention,
Figure 5 is a photograph of the coated housing of Figure 4 but with an additional coating of an electrically conductive coating,
Figure 6 and Figure 7 are graphs showing the temperature at various points in the coating of the present invention in the tests of Example 1.

### Detailed Description of the Invention

### Example 1

A composition was made up as follows:

| | |
|---|---|
| 76% | Rhodorsil Elastomer MF775 U CR, which is a silicone rubber made by Henkel and commercially available, e.g from Henkel Ltd., Road 5, Winsford Industrial Estate, Winsford, Cheshire CW7 3QY |
| 9% | AP501/100 Fluorosilicone Rubber, which is commercially available from Advanced Polymers Ltd, 20 Ham Bridge Trading Estate, Willowbrook Road, Worthing, West Sussex BN14 8NA |
| 15% | Carbon Black additive |
| 1-3% | Platinum catalyst |

As can be seen the composition includes both a silicone rubber and a fluorosilicone rubber and also carbon powder in an effort to make the surface electrically conductive.

This composition is mixed together as "rubbers" and extruded to form partially cured strips that are either 4 or 8 mm thick, 1m in length and 50 mm in width.

### Example 2

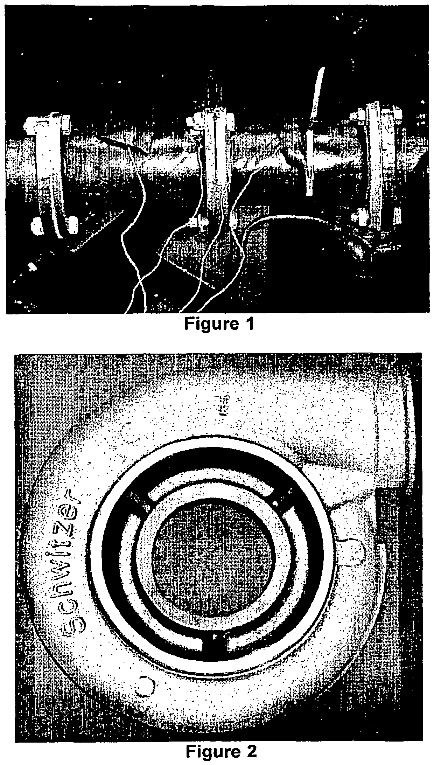

A test rig shown in Figure 1 was constructed comprised of two test pieces fitted in-line to a diesel engines exhaust. The purpose of the testing was to determine the thermal barrier performance of the compound and to look at two different bonding methods. One of test pieces was sand blasted while the other was not and was merely covered with a primer, SS4004P from Momentive Performance Materials of 187 Danbury Road Wilton, CT 06897 USA. Two thermocouples were placed on each exhaust test piece that would provide readings of the temperature of the test piece surface. Thus, thermocouples #1 and #2 were located on the exhaust test piece that had been sand blasted, while thermocouples #3 and #4 where located on the primer only surface prepared exhaust piece. Thermocouple #1 and #3 were positioned on the outer metal surface of the exhaust test piece and then wrapped with one layer (4 mm thick) of the silicone rubber composition of Example 1. The other two thermocouples (thermocouples #2 and #4) were placed on the outside of the silicone rubber layer and held in position by small pieces of rubber. The rubber was then cured in an oven at 200°C for four hours.

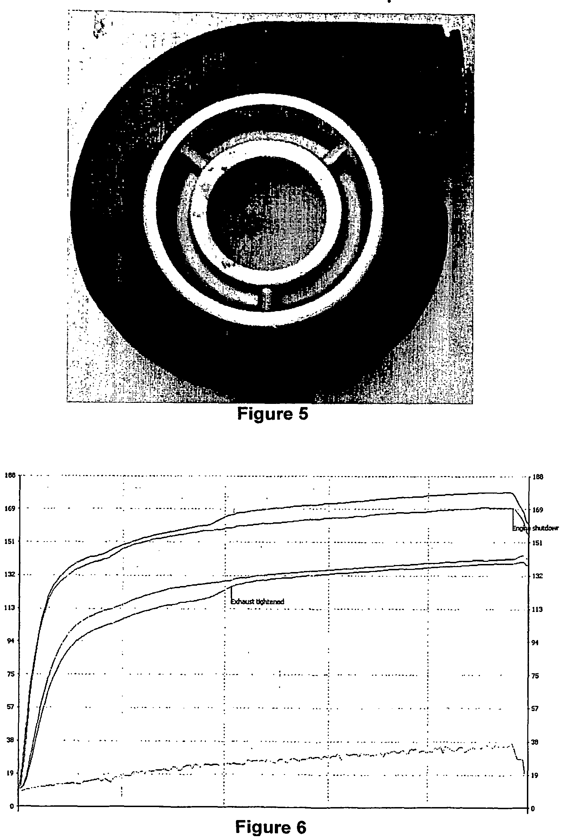

The exhaust test pieces were then connected into the exhaust of the diesel engine, which was run at 1800 rpm, and the temperature recorded by the thermocouples was monitored over a period of 1 hour 30 minutes. A graph showing the readings from the thermocouples is shown in Figure 6, where the upper two plots are from thermocouples #1 and #3 positioned on the outer metal surface of the exhaust test piece while the next two plots are from thermocouples #2 and #4 placed on the outside of the silicone rubber layer. The lower plot is a reading of ambient temperature.

The maximum exhaust temperature on the sand blasted exhaust test piece during the run was 179.3°C at an ambient temperature of 35°C. The temperature drop between the exhaust surface temperature and the surface of the silicone/fluorosilicone rubber on the sand blasted exhaust piece was 38.1°C, or a 21.2% reduction.

The corresponding performance in the silicone/fluorosilicone rubber on the primer-exhaust test piece gave a temperature difference of 31.6°C, or 18.6% reduction, between the exhaust surface temperature, which was a maximum of 170.3°C at an ambient temperature of 35°C.

### Example 3

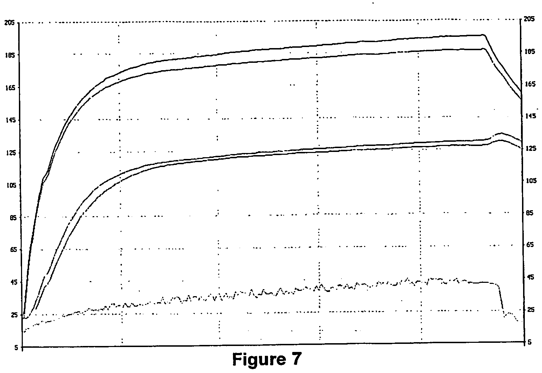

Using the same set up as described in connection with Example 2, but with an additional layer of the same composition of the silicone/fluorosilicone rubber compound, the engine was run at 1800 rpm and the temperature given by the thermocouples was monitored over a period of 1 hour 30 minutes. A graph showing the temperature readings from the thermocouples is shown in Figure 7, where again the upper two plots are from thermocouples #1 and #3 positioned on the outer metal surface of the exhaust test piece while the next two plots are from thermocouples #2 and #4 placed on the outside of the silicone rubber layer. The lower plot is a reading of ambient temperature.

The maximum exhaust temperature on the sand blasted exhaust test piece during the run was 195.5°C at an ambient temperature of 42.2°C. The temperature drop between the exhaust surface temperature and the surface of the silicone rubber on the sand blasted exhaust piece was 64.9°C, a 33.2% reduction.

The corresponding performance in the silicon rubber on the primer-exhaust test piece gave a temperature difference of 59.2°C between the maximum exhaust surface temperature of 186.8 °C, at an the ambient temperature of 42.2°C, and the silicone rubber surface temperature. A reduction of 31.7%. The conclusion from the testing described in Examples 2 and 3, is that the silicone/fluorosilicone compound provides a suitable performance for reducing the temperature of a hot surface of a piece of equipment that is exposed to a potentially explosive environment, thereby allowing the equipment to be used in the atmosphere.

### Example 4

A test in accordance with the requirements of Clause 26.4.2 of standard EN60079-0:2006 was set up to test the impact resistance of the silicone/fluorosilicone rubber composition of Example 1. The requirement for impact resistance of a non-metallic part in apparatus group II is 7 Joules.

The sample used was a sheet having a thickness of 4mm. The test involved dropping a weight of 1 kg having a part spherical end face (diameter 25mm) on the silicone/fluorosilicone sheet from a height of 0.7 m. Due to the properties of the rubber, it was deemed that the worse case for impact resistance would be at a lower temperature. Therefore, the sample was conditioned in a freezer for 24 hours at - 30°C before being subjected to the impactor weight.

The sample was not damaged in any way during the test, showing that it is robust under the test conditions.

### Example 5

The surface resistivity of the composition of Example 1 was measured. Even with a loading of 15% carbon, the surface resistance was still too high to measure and was therefore in excess of 1 GΩ.

This result shows that an additional coating with conductive properties can overlie the silicone/fluorosilicone compound, although the conductive properties of the overlying layer may have to be increased to make the coating have a sufficiently high conductivity for a specific application.

### Example 6

A composition was made up as follows:

| | |
|---|---|
| 90% | Rhodorsil Elastomer MF775 U CR, which is a silicone rubber |
| 10% | AP501/100 Fluorosilicone Rubber |
| 1-3% | Peroxide catalyst |

### Example 7

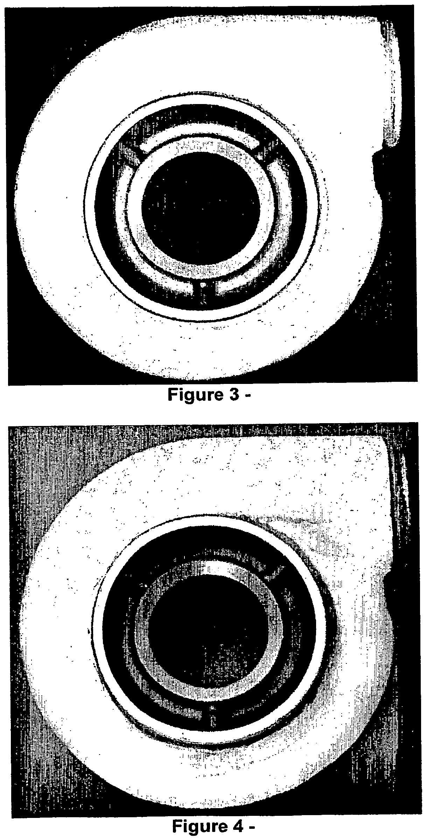

A cast aluminium turbocharger compressor housing for a diesel engine shown in Figure 3, was cleaned down to bare metal by grit blasting and was then degreased using a solvent cleaner. Strips of not fully cured compound strips having the composition of Example 6 were carefully applied to the housing until all the areas have been covered to a thickness between 4 to 8mm. The housing is then place in a cold oven and cured at a temperature of 145°C for thirty minutes. The resulting housing is shown in Figure 3.

The edges of the silicone rubber were then sealed using a high temperature silicone adhesive/sealant, Intek XTS-320, which was allowed to cure at room temperature, see Figure 4. Optionally, a conductive coating, C 853 thinned with toluene, was applied over the silicone rubber and allowed to cure at room temperature. The resulting housing is shown in Figure 5.

## Claims

1. Use of a composition comprising, in % by volume:
9 to 90% of one or more silicone rubber
9 to 90% of one or more fluorosilicone rubber
0.05 to 1 % of one or more vulcanisation catalyst and
0 to 20% of one or more additive
to provide a surface coating that is at least 4mm thick on an article that, in use, operates at a temperature above 200°C, e.g. above 250°C, in a potentially explosive environment.

2. Use as claimed in claim 1, wherein the article is a surface of an engine or an engine component.

3. Use as claimed in claim 1 or claim 2, wherein a bonding agent is present between the article and the coating to promote adhesion between the coating and the article, which bonding agent optionally being a layer having a dry thickness of at least 10 µm.

4. Use as claimed in any preceding claim, wherein the coating has a thickness that is 4-12 mm.

5. Use as claimed in any preceding claim, wherein:
• the amount of silicone rubber is at least 50%, e.g. at least 60% and/or
• the amount of fluorosilicone rubber is 9 to 30%, e.g. 10 to 20%.

6. An article having a surface that in use operates at a temperature above 200°C e.g. above 250°C, in a potentially explosive environment, the surface including a surface coating that has a thickness of at least 4 mm and has a composition comprising, in % by volume:
9 to 90% of one or more silicone rubber
9 to 90% of one or more fluorosilicone rubber
0.05 to 1 % of one or more vulcanisation catalyst and
0 to 20% of one or more additive.

7. An article as claimed in claim 6, wherein the article is an engine or an engine component.

8. An article as claimed in claim 6 or claim 7, wherein a bonding agent is present between the article and the coating to promote adhesion between the coating and the article, the bonding agent optionally being a layer having a dry thickness of at least 10 µm.

9. An article as claimed in any of claims 6 to 8, wherein the coating has a thickness that is 4-12 mm.

10. An article as claimed in any of claims 6 to 9, wherein:
• the amount of silicone rubber is at least 50%, e.g. at least 60% and/or
• the amount of fluorosilicone rubber is 9 to 30%, e.g. 10 to 20%.

11. A method allowing an article to be maintained in a potentially explosive environment at a surface temperature above 200°C, e.g. above 250°C, which method comprises:
• applying a composition comprising, in % by volume:
9 to 90% of one or more silicone rubber
9 to 90% of one or more fluorosilicone rubber
0.05 to 1% of one or more vulcanisation catalyst and
0 to 20% of one or more additive
to the surface of the article to form a coating thereon that has a thickness of at least 4 mm and curing the composition, and
• subsequently maintaining the article in the potentially explosive environment such that the surface temperature of the article is above 200°C, e.g. above 250°C but the surface temperature of the coating does not exceed 200°C.

12. A method as claimed in claim 11, wherein the article is an engine or an engine component that is maintained at said temperature by operating the engine.

13. A method as claimed in claim 11 or claim 12, wherein a bonding agent is present between the article and the coating to promote adhesion between the coating and the article, the bonding agent optionally being a layer having a dry thickness of at least 10 µm.

14. A method as claimed in any of claims 11 to 13, wherein the coating has a thickness that is 4-12 mm.

15. A method as claimed in any of claims 11 to 14, wherein
• the amount of silicone rubber is at least 50%, e.g. at least 60% and/or
• the amount of fluorosilicone rubber is 9 to 30%, e.g. 10 to 20%.

## Patentansprüche

1. Verwendung einer Zusammensetzung, die in Volumen-% umfasst:
9 bis 90% eines oder mehrerer Silikonkautschuke,
9 bis 90% eines oder mehrerer Fluorsilikonkautschuke,
0,05 bis 1% eines oder mehrerer Vulkanisationskatalysatoren, und
0 bis 20% eines oder mehrerer Zusatzstoffe,
zum Bereitstellen einer Oberflächenbeschichtung mit einer Dicke von mindestens 4 mm auf einem Artikel, der im Betrieb bei einer Temperatur von mehr als 200°C, z. B. von mehr als 250°C, in einer potentiell explosionsgefährdeten Umgebung agiert.

2. Verwendung nach Anspruch 1, wobei es sich bei dem Artikel um eine Oberfläche oder eine Komponente eines Motors handelt.

3. Verwendung nach Anspruch 1 oder 2, wobei zwischen dem Artikel und der Beschichtung ein Haftmittel vorliegt, um die Adhäsion zwischen der Beschichtung und dem Artikel zu verstärken, wobei es sich bei dem Haftmittel gegebenenfalls um eine Schicht handelt, die im trockenen Zustand eine Dicke von mindestens 10 µm aufweist.

4. Verwendung nach einem der vorhergehenden Ansprüche, wobei die Dicke der Beschichtung zwischen 4 und 12 mm beträgt.

5. Verwendung nach einem der vorhergehenden Ansprüche, wobei
• der Anteil des Silikonkautschuks mindestens 50%, z. B. mindestens 60%, beträgt, und/oder
• der Anteil des Fluorsilikonkautschuks zwischen 9 und 30%, z. B. zwischen 10 und 20%, beträgt.

6. Artikel mit einer Oberfläche, die im Betrieb bei einer Temperatur von mehr als 200°C, z. B. von mehr als 250°C, in einer potentiell explosionsgefährdeten Umgebung agiert, wobei die Oberfläche eine Oberflächenbeschichtung mit einer Dicke von mindestens 4 mm sowie eine Zusammensetzung einschließt, die in Volumen-% umfasst:
9 bis 90% eines oder mehrerer Silikonkautschuke,
9 bis 90% eines oder mehrerer Fluorsilikonkautschuke,
0,05 bis 1% eines oder mehrerer Vulkanisationskatalysatoren, und
0 bis 20% eines oder mehrerer Zusatzstoffe.

7. Artikel nach Anspruch 6, wobei es sich bei dem Artikel um einen Motor oder eine Motorkomponente handelt.

8. Artikel nach Anspruch 6 oder 7, wobei zwischen dem Artikel und der Beschichtung ein Haftmittel vorliegt, um die Adhäsion zwischen der Beschichtung und dem Artikel zu verstärken, wobei es sich bei dem Haftmittel gegebenenfalls um eine Schicht handelt, die im trockenen Zustand eine Dicke von mindestens 10 µm aufweist.

9. Artikel nach einem der Ansprüche 6 bis 8, wobei die Dicke der Beschichtung zwischen 4 und 12 mm beträgt.

10. Artikel nach einem der Ansprüche 6 bis 9, wobei:
• der Anteil des Silikonkautschuks mindestens 50%, z. B. mindestens 60%, beträgt, und/oder
• der Anteil des Fluorsilikonkautschuks zwischen 9 und 30%, z. B. zwischen 10 und 20%, beträgt.

11. Verfahren, das es ermöglicht, dass ein Artikel in einer potentiell explosionsgefährdeten Umgebung bei einer Oberflächentemperatur von mehr als 200°C, z. B. mehr als 250°C, gehalten wird, wobei das Verfahren umfasst:
• das Aufbringen einer Zusammensetzung, die in Volumen-% umfasst:
9 bis 90% eines oder mehrerer Silikonkautschuke,
9 bis 90% eines oder mehrerer Fluorsilikonkautschuke,
0,05 bis 1% eines oder mehrerer Vulkanisationskatalysatoren, und
0 bis 20% eines oder mehrerer Zusatzstoffe.
auf die Oberfläche des Artikels, um eine Beschichtung auf dem Artikel auszubilden, die eine Dicke von mindestens 4 mm aufweist, sowie das Aushärten der Zusammensetzung,
und
• das anschließende Halten des Artikels in der potentiell explosionsgefährdeten Umgebung, so dass die Oberflächentemperatur des Artikels bei mehr als 200°C, z. B. bei mehr als 250°C, liegt, die Oberflächentemperatur der Beschichtung jedoch 200°C nicht überschreitet.

12. Verfahren nach Anspruch 11, wobei es sich bei dem Artikel um einen Motor oder eine Motorkomponente handelt, der/die im Betrieb des Motors bei der genannten Temperatur gehalten wird.

13. Verfahren nach Anspruch 11 oder 12, wobei zwischen dem Artikel und der Beschichtung ein Haftmittel vorliegt, um die Adhäsion zwischen der Beschichtung und dem Artikel zu verstärken, wobei es sich bei dem Haftmittel gegebenenfalls um eine Schicht handelt, die im trockenen Zustand eine Dicke von mindestens 10 µm aufweist.

14. Verfahren nach einem der Ansprüche 11 bis 13, wobei die Dicke der Beschichtung zwischen 4 und 12 mm beträgt.

15. Verfahren nach einem der Ansprüche 11 bis 14, wobei
• der Anteil des Silikonkautschuks mindestens 50%, z. B. mindestens 60%, beträgt, und/oder
• der Anteil des Fluorsilikonkautschuks zwischen 9 und 30%, z. B. zwischen 10 und 20%, beträgt.

## Revendications

1. Utilisation d'une composition comprenant, en % en volume :
9 à 90 % d'un ou plusieurs caoutchoucs de silicone
9 à 90 % d'un ou plusieurs caoutchoucs de fluorosilicone
0,05 à 1 % d'un ou plusieurs catalyseurs de vulcanisation et
0 à 20 % d'un ou plusieurs additifs
pour former un revêtement de surface qui est épais d'au moins 4 mm sur un article qui, en utilisation, fonctionne à une température au-dessus de 200 °C, par exemple au-dessus de 250 °C, dans un événement potentiellement explosif.

2. Utilisation selon la revendication 1, dans laquelle l'article est une surface d'un moteur ou d'un composant de moteur.

3. Utilisation selon la revendication 1 ou la revendication 2, dans laquelle un agent de liaison est présent entre l'article et le revêtement pour favoriser l'adhérence entre le revêtement et l'article, lequel agent de liaison est facultativement une couche ayant une épaisseur à sec d'au moins 10 µm.

4. Utilisation selon l'une quelconque des revendications précédentes, dans laquelle le revêtement a une épaisseur qui est de 4 à 12 mm.

5. Utilisation selon l'une quelconque des revendications précédentes, dans laquelle :
• la quantité de caoutchouc de silicone est d'au moins 50 %, par exemple d'au moins 60 % et/ou
• la quantité de caoutchouc de fluorosilicone est de 9 à 30 %, par exemple de 10 à 20 %.

6. Article ayant une surface qui, en utilisation, fonctionne à une température au-dessus de 200 °C, par exemple au-dessus de 250 °C, dans un environnement potentiellement explosif, la surface incluant un revêtement de surface qui a une épaisseur d'au moins 4 mm et a une composition comprenant, en % en volume :
9 à 90 % d'un ou plusieurs caoutchoucs de silicone
9 à 90 % d'un ou plusieurs caoutchoucs de fluorosilicone
0,05 à 1 % d'un ou plusieurs catalyseurs de vulcanisation et
0 à 20 % d'un ou plusieurs additifs.

7. Article selon la revendication 6, dans lequel l'article est un moteur ou un composant de moteur.

8. Article selon la revendication 6 ou la revendication 7, dans lequel un agent de liaison est présent entre l'article et le revêtement pour favoriser l'adhérence entre le revêtement et l'article, l'agent de liaison étant facultativement une couche ayant une épaisseur à sec d'au moins 10 µm.

9. Article selon l'une quelconque des revendications 6 à 8, dans lequel le revêtement a une épaisseur qui est de 4 à 12 mm.

10. Article selon l'une quelconque des revendications 6 à 9, dans lequel :
• la quantité de caoutchouc de silicone est d'au moins 50 %, par exemple d'au moins 60 % et/ou
• la quantité de caoutchouc de fluorosilicone est de 9 à 30 %, par exemple de 10 à 20 %.

11. Procédé permettant de maintenir un article dans un environnement potentiellement explosif à une température de surface au-dessus de 200 °C, par exemple au-dessus de 250 °C, lequel procédé comprend les étapes consistant à :
• appliquer une composition comprenant, en % en volume :
9 à 90 % d'un ou plusieurs caoutchoucs de silicone
9 à 90 % d'un ou plusieurs caoutchoucs de fluorosilicone
0,05 à 1 % d'un ou plusieurs catalyseurs de vulcanisation et
0 à 20 % d'un ou plusieurs additifs
à la surface de l'article pour former sur celui-ci un revêtement qui a une épaisseur d'au moins 4 mm et durcir la composition, et
• maintenir ultérieurement l'article dans l'environnement potentiellement explosif de sorte que la température de surface de l'article est au-dessus de 200 °C, par exemple au-dessus de 250 °C, mais la température de surface du revêtement n'excède pas 200 °C.

12. Procédé selon la revendication 11, dans lequel l'article est un moteur ou un composant de moteur qui est maintenu à ladite température par exploitation du moteur.

13. Procédé selon la revendication 11 ou la revendication 12, dans lequel un agent de liaison est présent entre l'article et le revêtement pour favoriser l'adhérence entre le revêtement et l'article, l'agent de liaison étant facultativement une couche ayant une épaisseur à sec d'au moins 10 µm.

14. Procédé selon l'une quelconque des revendications 11 à 13, dans lequel le revêtement a une épaisseur qui est de 4 à 12 mm.

15. Procédé selon l'une quelconque des revendications 11 à 14, dans lequel
• la quantité de caoutchouc de silicone est d'au moins 50 %, par exemple d'au moins 60 % et/ou
• la quantité de caoutchouc de fluorosilicone est de 9 à 30 %, par exemple de 10 à 20 %.
